# EUROPEAN PATENT APPLICATION

(11) **EP 4 446 129 A1**
(43) Date of publication of application: **16.10.2024**
(21) Application number: 24168955.3
(22) Date of filing: 08.04.2024
(51) Int. Cl.: B60C 1/00, C08L 9/00

(54) **RUBBER COMPOSITION INCLUDING BIODEGRADABLE OIL, TIRE COMPRISING SUCH A RUBBER COMPOSITION AND METHOD OF FORMING OF A SHAPED ARTICLE**

(30) Priority: 14.04.2023 US 202318300845
(71) Applicant: The Goodyear Tire & Rubber Company, Akron, OH 44316 (US)
(72) Inventor: NOYES, Kelsey Elizabeth, Canton, 44718 (US); KULIG, Joseph John, Tallmadge, 44278 (US); GERSMAN, Michael Lawrence, Akron, 44311 (US); SANDSTROM, Erik Paul, Uniontown, 44685 (US)
(74) Representative: Kutsch, Bernd

(57) **Abstract**

A rubber composition suited for forming a tire tread is disclosed. The rubber composition includes 100 phr of elastomers, at least 30 phr of reinforcing filler, at least 1 phr of an esterified alkoxylated polyol, at least 1 phr of a plant-based triglyceride oil and a sulfur-based cure package.

## Description

### Field

The invention relates to a rubber composition, especially for a tire tread, and finds particular application in connection with a rubber composition including a biodegradable synthetic oil and a plant-based oil.

### Background

Rubber compositions suited to use in tires often include a mixture of elastomers, reinforcing fillers, processing aids, and a sulfur-containing cure package. The rubber composition may be formulated to provide specific properties, such as wet traction, snow traction, and the like.

Processing aids are intended to ease the compounding process when the elastomers and fillers are mixed. Conventional processing aids have included petroleum based rubber processing oils, such as naphthenic oils. More recently, triglyceride-based vegetable oils, such as soybean oil, sunflower oil, rapeseed oil and canola oil, have been used to improve processability of styrene/butadiene elastomers in uncured rubber compositions. Such processing oils can provide good cold weather (winter) performance while maintaining wet traction for a tire tread. See, for example, US 9,771,469 B2, 10,364,342 B2, 10,385,192 B2, and 10,519,300 B2. Processing oils have also been formed from a vegetable oil derivative which is the reaction product of an unsaturated fatty acid and an epoxidized vegetable oil, such as soybean oil or canola oil, as described in US 2022/0235195 A1.

One problem with such formulations is that while winter performance of the tires is improved, other properties may be compromised.

Described herein is a rubber composition which provides a tire with good winter performance while maintaining other desirable properties.

### Summary of the Invention

The invention relates to a rubber composition in accordance with claim 1, to a tire in accordance with claim 14 and to a method in accordance with claim 15.

Dependent claims refer to preferred embodiments of the invention.

In accordance with one embodiment, a rubber composition includes 100 phr of elastomers, at least 30 phr of reinforcing filler, at least 1 phr of an esterified alkoxylated polyol, at least 1 phr of a plant-based triglyceride oil, and a sulfur-based cure package.

In the rubber composition, the esterified alkoxylated polyol preferably has an average degree of alkoxylation of at least 5. The esterified alkoxylated polyol may include an esterified propoxylated glycerol. The esterified propoxylated glycerol may include ester groups derived from at least one C8 to C24 fatty acid. The esterified propoxylated glycerol preferably includes groups derived from at least one C12 or higher fatty acid. The rubber composition preferably includes at least 5 phr, or at least 8 phr of the esterified alkoxylated polyol. The ratio, by weight, of the esterified alkoxylated polyol to the plant-based triglyceride oil is preferably from 3:1 to 1:3.

The plant-based triglyceride oil is preferably selected from soybean oil, sunflower oil, canola oil, corn oil, coconut oil, cottonseed oil, olive oil, palm oil, peanut oil, safflower oil, and mixtures thereof. The plant-based triglyceride oil preferably includes or consists of soybean oil. The rubber composition preferably includes at least 5 phr, or at least 8 phr of the plant-based triglyceride oil.

The elastomers in the rubber composition preferably include a polybutadiene rubber and a styrene butadiene rubber.

The reinforcing filler preferably includes or is silica and carbon black.

The rubber composition preferably includes at least 20 phr silica and/or at least 3 phr carbon black. The ratio by weight of silica to carbon black is preferably at least 2:1, or at least 3:1, or at least 4:1.

The rubber composition preferably includes at least 1 phr of a silane-based silica coupling agent and/or at least one of a cure activator, a cure accelerator, an antioxidant and an antiozonant.

In another embodiment, a tire, preferably a pneumatic tire, includes a component, preferably a circumferential rubber tread, including a rubber composition as described in any of the aspects above.

In another embodiment, a method of forming a shaped article includes combining 100 phr of elastomers, at least 30 phr of reinforcing filler, at least 1 phr of an esterified alkoxylated polyol, at least 1 phr of a plant-based triglyceride oil, and a sulfur-based cure package to form a rubber composition, and curing the rubber composition to form the shaped article.

The shaped article is preferably a tire tread.

In a preferred embodiment, the rubber composition includes 100 phr of elastomer and 45-80 phr of a combination of carbon black and silica. The ratio by weight of the silica to the carbon black is at least 4:1. The composition further includes a processing oil including an esterified alkoxylated polyol and a plant-based triglyceride oil. The ratio by weight of the esterified alkoxylated polyol to the plant-based triglyceride oil is from 3:1 to 1:3. The composition further includes a total of 1-5 phr of at least one of an antioxidant, an antidegradant, and an antiozonant, and a total of 5-15 phr of a sulfur-containing cure package which includes a sulfur cure agent, a cure activator, and a cure accelerator.

### Detailed Description of Preferred Embodiments

Aspects of the exemplary embodiment relate to a rubber composition which includes a biodegradable synthetic oil, which can be formed from plant-based materials. The exemplary biodegradable synthetic oil is an esterified alkoxylated polyol, such as an esterified propoxylated glycerol (EPG). The esterified alkoxylated polyol is used in combination with a plant-based triglyceride oil, such as soybean oil.

The rubber composition is suited to use in a tire, in particular, in a tire tread.

The terms "rubber" and "elastomer" may be used interchangeably herein, unless otherwise indicated. The terms "rubber composition" or "compounded rubber" are used interchangeably to refer to "rubber which has been blended or mixed with various ingredients and materials" and such terms are well known to those having skill in the rubber mixing or rubber compounding art.

In the description, the term "phr" refers to parts of a respective material per 100 parts by weight of elastomer(s). By convention, the total amount of elastomer in the rubber composition is 100 phr. The term "phf" refers to parts by weight of one filler to 100 parts by weight of all fillers.

The terms "cure" and "vulcanize" may be used interchangeably unless otherwise indicated.

As used herein, Mooney viscosity (ML 1+4) is measured in M.U. at 100°C according to ASTM D1646-19a, "Standard Test Methods for Rubber-Viscosity, Stress Relaxation, and Pre-Vulcanization Characteristics (Mooney Viscometer)."

The glass transition temperature (Tg) of an elastomer or rubber composition, where referred to herein, represents the glass transition temperature(s) of the respective elastomer or rubber composition in its uncured state or possibly a cured state in the case of a rubber composition. Tg values referred to herein are determined as a peak midpoint by a differential scanning calorimeter (DSC) at a temperature rate of increase of 10° C per minute, according to ASTM D3418-21, "Standard Test Method for Transition Temperatures and Enthalpies of Fusion and Crystallization of Polymers by Differential Scanning Calorimetry."

In a first aspect of the exemplary embodiment, a rubber composition includes 1) one or more vulcanizable elastomers, 2) one or more reinforcing fillers, 3) a processing oil comprising an esterified alkoxylated polyol and a plant-based triglyceride oil, 4) optionally, one or more one or more other processing aids, antioxidants, antidegradants, and/or antiozonants, and 5) a cure package, which may include a sulfur-containing curing agent.

In a second aspect of the exemplary embodiment, a method of forming a cured rubber composition includes mixing 1) one or more vulcanizable elastomers, 2) one or more reinforcing fillers, 3) a processing oil including an esterified alkoxylated polyol and a plant-based triglyceride oil, 4) optionally, one or more one or more other processing aids, antioxidants, antidegradants, and/or antiozonants, and 5) a cure package, which may include a sulfur-containing curing agent, and heating the resulting mixture to a suitable temperature to form the cured rubber composition.

In a third aspect of the exemplary embodiment, a tire includes a tread which includes the cured rubber composition.

### Elastomers

One or more sulfur vulcanizable elastomers may be used in the rubber composition. These elastomers include carbon-carbon double bonds and may include conjugated diene-based elastomers and copolymers.

In one embodiment, the elastomers include a mixture of synthetic and/or naturally sourced elastomers, such as a mixture of two or more of polybutadiene (PBD), styrene-butadiene elastomer (SBR) (a copolymer of styrene and butadiene), natural rubber (NR) (predominantly cis-1,4,-polyisoprene), synthetic polyisoprene, and butyl rubber (a copolymer of isobutylene and isoprene). The elastomers may be selected in suitable amounts to balance the overall properties of a tire.

As an example, a mixture of polybutadiene and styrene-butadiene elastomer may be employed in a ratio by weight of SBR to PBD of at least 50:50, or at least 55:45, or at least 60:40, or up to 80:20, or up to 75:25, such as 70:30. In a preferred embodiment, the PBD and SBR are the only elastomers used in the rubber composition.

The SBR is preferably used in the rubber composition in an amount of at least 50 phr, or at least 55 phr, or at least 60 phr, or up to 80 phr, or up to 75 phr, such as 70 phr.

The SBR may be a solution-polymerized styrene-butadiene rubber (SSBR) and/or an emulsion-polymerized styrene-butadiene rubber (ESBR). In one embodiment, the SBR is an SSBR.

In some embodiments, the SBR may be functionalized to improve interaction with the carbon black and/or silica.

The SBR preferably has a Mooney Viscosity of from 40 to 80 M.U., such as at least 50 or up to 70.

The SBR preferably has a glass transition temperature Tg of -10°C, or below.

Example SSBRs include those sold under the designation SPRINTAN^{®} from Synthos Group, such as SPRINTAN^{®} 4601, 4602, 4502, and 3402, and from Trinseo LLC, such as SPRINTAN^{®} SLR-4602 - Schkopau. None of these SSBRs includes oil. For example, SPRINTAN^{®} SLR-4602 - Schkopau is manufactured by anionic solution polymerization using an organo-lithium initiator. The product has a medium styrene/high vinyl microstructure and a typical glass transition temperature of -25°C. The elastomer is functionalized for improved polymer/filler interaction with carbon black and silica. A non-staining stabilizer is added in the production. It has a Mooney Viscosity of 65, a bound styrene content of 21.0%, and a vinyl structure of 49.0 %.

Example ESBRs are sold under the designation PLIOFLEX^{®} by The Goodyear Tire & Rubber Company. Examples include PLIOFLEX^{®} 1502, 1712C, 1763, and 1769. These emulsion polymerized styrene-butadiene copolymers incorporate a non-staining antioxidant system.

Exemplary PBDs may be predominantly cis-1 ,4-polybutadiene, e.g., at least 90 wt. % cis-content, or at least 92 wt. %, or at least 95 wt. % cis-content.

The PBD preferably has an uncured Mooney viscosity of from 50 to 100.

The PBD is preferably used in the rubber composition in an amount of at least 20 phr, or at least 25 phr, or up to 45 phr, or up to 40 phr, or up to 35 phr, such as 30 phr.

An exemplary high-cis polybutadiene is available from The Goodyear Tire & Rubber Company under the tradename BUD4001^{™}, having a Tg of about -102° C.

Other vulcanizable elastomers useful in the rubber composition may be selected from natural rubber, synthetic polyisoprene, halobutyl rubber, e.g., bromobutyl rubber and chlorobutyl rubber, nitrile rubber, liquid rubbers, polynorbornene copolymer, isoprene-isobutylene copolymer, ethylene-propylene-diene rubber, chloroprene rubber, acrylate rubber, fluorine rubber, silicone rubber, polysulfide rubber, epichlorohydrin rubber, styrene-isoprene-butadiene terpolymer, hydrated acrylonitrile butadiene rubber, isoprene-butadiene copolymer, butyl rubber, hydrogenated styrene-butadiene rubber, butadiene acrylonitrile rubber, a terpolymer formed from ethylene monomers, propylene monomers, and/or ethylene propylene diene monomer (EPDM), isoprene-based block copolymers, butadiene-based block copolymers, styrenic block copolymers, styrene-butadiene-styrene block copolymer (SBS), styrene-ethylene/butylene-styrene block copolymer (SEBS), styrene-[ethylene-(ethylene/propylene)]-styrene block copolymer (SEEPS), styrene-isoprene-styrene block copolymer (SIS), random styrenic copolymers, hydrogenated styrenic block copolymers, styrene butadiene copolymers, polyisobutylene, ethylene vinyl acetate (EVA) polymers, polyolefins, amorphous polyolefins, semi-crystalline polyolefins, alpha-polyolefins, reactor-ready polyolefins, acrylates, metallocene-catalyzed polyolefin polymers and elastomers, reactor-made thermoplastic polyolefin elastomers, olefin block copolymer, co-polyester block copolymer, polyurethane block copolymer, polyamide block copolymer, thermoplastic polyolefins, thermoplastic vulcanizates, ethylene vinyl acetate copolymer, ethylene n-butyl acrylate copolymer, ethylene methyl acrylate copolymer, neoprene, acrylics, urethane, poly(acrylate), ethylene acrylic acid copolymer, polyether ether ketone, polyamide, atactic polypropylene, polyethylene including atactic polypropylene, ethylene-propylene polymers, propylene-hexene polymers, ethylene-butene polymers, ethylene octene polymers, propylene-butene polymers, propylene-octene polymers, metallocene-catalyzed polypropylene polymers, metallocene-catalyzed polyethylene polymers, ethylene-propylene-butylene terpolymers, copolymers produced from propylene, ethylene, C₄-C₁₀ alpha-olefin monomers, polypropylene polymers, maleated polyolefins, polyester copolymers, copolyester polymers, ethylene acrylic acid copolymer, and/or polyvinyl acetate, and/or wherein the polymer optionally comprises a modification and/or functionalization selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer.

Such elastomers may be present in minor amounts (e.g., totaling up to 20 wt. %, or up to 10 wt. %, or up to 5 wt. %, or up to 2 wt. % of the elastomers), and/or may be substituted, in whole or in part, for the SBR and PBD exemplified above.

### Processing Aids

Processing aids are preferably used at a total of 3 to 60.0 phr, or up to 50 phr, and may include one or more of a processing oil, a resin, a wax, and a non-oil liquid plasticizer.

### Processing Oils

Processing oils are oils that are used in the non-productive stage of forming the rubber composition and aid in processing the composition, as well as, in some cases, providing beneficial properties to the cured rubber composition. Processing oils are liquid at room temperature (i.e., liquid at 25°C and above, at atmospheric pressure). Generally, oils and other liquid plasticizers have a Tg that is below 0°C, generally well below, such as less than -30°C, or less than -40°C, or less than -50°C, such as a Tg of 0°C to -100°C. The Tg of the oil or oils used is preferably in a range of from -40°C to - 100°C.

The rubber composition preferably includes at least 6 phr, or at least 8 phr, or at least 10 phr, or at least 15 phr, or at least 20 phr, or up to 50 phr, or up to 40 phr of processing oils.

Exemplary processing oils include petroleum oils, plant-based oils, and mixtures thereof. Petroleum based oils may include aromatic, naphthenic, low polycyclic aromatic (PCA) oils, and mixtures thereof. Plant-based oils may include oils harvested from vegetables, nuts, seeds, and derivatives thereof, such as triglycerides and esterified alkoxylated polyols. The exemplary processing oil comprises or consists of a blend of a plant-based triglyceride oil and an esterified alkoxylated polyol, which may also be plant-based. Other processing oils are also contemplated.

### The Esterified Alkoxylated Polyol

The processing oil used in the exemplary rubber composition includes an esterified alkoxylated polyol (more generally, a mixture of such polyols). The rubber composition includes at least 1 phr, or at least 2 phr, or at least 5 phr, or at least 8 phr, or at least 10 phr, or up to 50 phr, or up to 40 phr, or up to 30 phr, or up to 20 phr, or up to 15 phr, or up to 12 phr of esterified alkoxylated polyol, such as 8 to 12 phr.

Esterified alkoxylated polyols are generally derived from a polyol, such as glycerol, trimethylolpropane, neopentyl glycol, and/or sorbitol. In one embodiment, the polyol has only three hydroxyl groups. The polyol is alkoxylated with an alkylene oxide, such as propylene oxide, to form alkylene glycol units on one or more of the hydroxyl groups of the polyol. Esterification of the alkoxylated polyol with a fatty acid, or a mixture of fatty acids, results in a mixture of esterified alkoxylated polyols with an average degree of alkoxylation D. The average degree of alkoxylation D of an esterified alkoxylated polyol is expressed as the average number of alkoxide units on the polyol and is preferably at least 3 or at least 5, or up to 20, or up to 15, or up to 12.

Preferred fatty acids for forming an esterified alkoxylated polyol include those split from vegetable-sourced fats and oils, such as saturated or unsaturated C8 and higher fatty acids, and mixtures thereof. Examples include C10 and higher fatty acids, C12 and higher fatty acids, C14 and higher fatty acids, and fatty acids up to C30, or up to C24, or up to C20, or up to C16. Examples of C8 to C24 fatty acids which may be employed include saturated acids, such as caprylic acid, capric acid, lauric acid, myristic acid, palmitic acid, stearic acid, arachidic acid, behenic acid and combinations thereof. Examples of C8 to C24 unsaturated acids which may be employed include oleic acid, linoleic acid, α-linolenic acid, arachidonic acid, eicosapentaenoic acid, erucic acid, docosahexaenoic acid, palmitoleic acid, eicosenoic acid, and combinations thereof. The fatty acid(s) may be naturally occurring or synthetically produced. Similarly, mixtures of fatty acids may be used including those mixtures obtained by splitting natural or modified triglycerides, such as babassu oil, canola oil, cocoa butter, coconut oil, corn oil, cottonseed oil, jojoba oil, lard, meadowfoam oil, menhaden oil, olive oil, palm oil, palm kernel oil, peanut oil, rapeseed oil, rice bran oil, safflower oil, sesame seed oil, soybean oil, sunflower oil and tallow, or fully or partially hydrogenated mixtures or fractionated mixtures thereof.

In one embodiment, the esterified alkoxylated polyol comprises an esterified propoxylated triglyceride, such as an esterified propoxylated glycerol (EPG). The rubber composition includes at least 1 phr, or at least 2 phr, or at least 3 phr, or at least 5 phr, or at least 8 phr, or at least 10 phr, or up to 60 phr, or up to 50 phr, or up to 40 phr, or up to 30 phr, or up to 20 phr, or up to 15 phr, or up to 12 phr, such as 8 to 12 phr of esterified EPG oil or other esterified alkoxylated polyol.

EPG oils may be formed by propoxylation of glycerol using propylene oxide to produce glycerol with propylene glycol units (PGUs) inserted on each of its hydroxyl groups, followed by esterification with a fatty acid (e.g., as described above) at a temperature of from 100° C to 250° C, resulting in the esterification of the hydroxyl moieties of the PGUs to produce EPG. The EPG may include an average of from 2 to 100 PGUs per glycerol.

The melting temperature of the EPG can be altered by the particular fatty acids used to form the EPG, or by altering the degree of propoxylation D of the glycerol. The EPG or combination of EPG may have a solid fat index of at least 60 at 20°C, or at least 70 at 20°C, or at least 80 at 20°C.

The EPG may be of the general form: 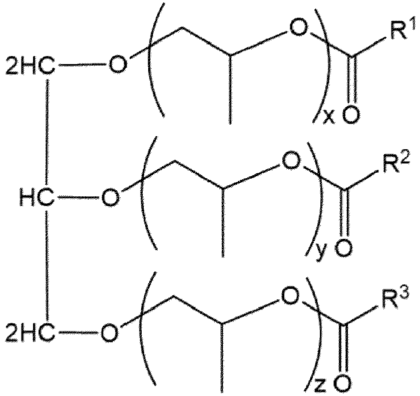 where x, y, and z are independently at least 1 and x+y+z=D, the average degree of propoxylation, e.g., D ≥ 4, or ≥ 5, or ≥ 8 or ≤ 15, or ≤ 12, or ≤ 10; and R¹, R², and R³ are each a C8-C30, or C10-C24 saturated or unsaturated fatty acid-derived unit.

EPGs may be characterized by D, the average degree of alkoxylation, more specifically, the average degree of propoxylation (rounded to the nearest integer), and by the fatty acid employed, which may be expressed as the predominant (most frequently occurring) carbon chain length in fatty acid-derived units R¹, R², and R³. For example, EPG-05 C12 fatty acid indicates that the EPG has an average degree of propoxylation D of about 5 and that the fatty acid used has predominant carbon chain length of 12. A "C12 fatty acid" thus indicates that the predominant fatty acid is dodecanoic acid, but that the EPG may also include other fatty acid units (typically in the range C10-C14) in lesser amounts. Where two or more fatty acids are each used in significant amounts, the most frequently occurring may be denoted, such as "C12-C14 fatty acid" or "C8/C12 fatty acid." In one embodiment, a C12 fatty acid is used. In some cases, the fatty acid may be designated by its source(s). For example, EPG-05 SO indicates that the fatty acid is derived from soybean oil, and thus includes a mixture of fatty acids commonly occurring in soybean oil.

Preferred EPGs are plant-based in that the fatty acid, and optionally also the glycerol, are derived from plants.

Thus, for example, C12 fatty acids can be obtained from palm oil and/or coconut oil. Glycerol can be extracted from palm oil and/or soybean oil, for example.

EPGs useful herein are described, for example, in US 5,603,978 and 5,641,534, and US 2019/0367831 A1 and US 2013/0344193 A1. US 4,983,329, US 5,175,323, US 5,304,665, US 5,399,728 and US 5,681,939 describe exemplary methods for preparation of EPGs.

### The Plant-based Triglyceride Oil

The rubber composition preferably includes a total of at least 1 phr, or at least 2 phr, or at least 3 phr, or at least 5 phr, or at least 8 phr, or at least 10 phr, or at least 15 phr, or up to 60 phr, or up to 50 phr, or up to 40 phr, or up to 20 phr of one or more plant-based triglyceride oils. In one embodiment, a ratio by weight of the EPG to the plant-based triglyceride oil is from 5:1 to 1:5, such as from 2:1 to 1:2, or from 1:5:1 to 1:1.5.

Exemplary plant-based triglyceride oils include soybean oil, sunflower oil, canola (rapeseed) oil, corn oil, coconut oil, cottonseed oil, olive oil, palm oil, peanut oil, safflower oil, and mixtures thereof.

Table 1 illustrates relative saturated, monounsaturated and polyunsaturated contents of various plant-based triglyceride oils.

**TABLE 1:**

| Vegetable Oil | Wt. % Saturated | Wt. % Mono Unsaturated | wt. % Poly Unsaturated |
|---|---|---|---|
| Soybean | 16 | 23 | 58 |
| Sunflower | 10 | 45 | 40 |
| Canola (Rapeseed) | 7 | 63 | 28 |
| Corn | 13 | 28 | 55 |
| Coconut | 87 | 6 | 2 |
| Cottonseed | 26 | 18 | 52 |
| Olive | 14 | 73 | 11 |
| Palm | 49 | 37 | 9 |
| Peanut | 17 | 46 | 32 |
| Safflower | 10 | 45 | 40 |

Particularly suitable are oils that are less than 20 wt.% saturated oil and/or at least 40 wt. %, or at least 50 wt. % polyunsaturated oil. For example, soybean oil is a mixture of glycerol tri-esters of unsaturated fatty acids. Such fatty acids may include linolenic acid, linoleic acid, and oleic acid, e.g., in a ratio of 7-10 wt. % linolenic acid, 48-52 wt. % linoleic acid, and 20-25 wt. % oleic acid, with other fatty acids being present in smaller amounts. In one embodiment, the plant-based triglyceride oil comprises or consists of soybean oil.

In a preferred embodiment, a ratio, by weight, of the esterified alkoxylated polyol (e.g., EPG) to the plant-based triglyceride oil is from 3:1 to 1:3, or from 2:1 to 1:2, or from 1.5:1 to 1:1.5.

### Liquid Plasticizers other than Oils

The processing aids may include non-oil liquid plasticizers, such as ether plasticizers, ester plasticizers, phosphate plasticizers, and sulfonate plasticizers. These other liquid plasticizers may be absent from the rubber composition or may be present at 1 phr, or less, or 0.5 phr, or less, or 0.1 phr, or less.

### Resins

Resins, in contrast to liquid plasticizers, are generally solid at room temperature. Resins may be absent from the composition When used, a total amount of resin in the rubber composition may be at least 0.5 phr, or at least 1 phr, or at least 3 phr, or up to 80 phr, or up to 50 phr, or up to 30 phr, or up to 20 phr, or up to 10 phr. In some embodiments, no resin is employed in the rubber composition. Resins can be used to improve wet traction and winter tread performance.

Example resins which may be used in the rubber composition include hydrocarbon resins. Exemplary hydrocarbon resins include aromatic, aliphatic, and cycloaliphatic resins. In one embodiment, the hydrocarbon resin is present in the rubber composition in a total amount of at least 1 phr, or at least 3 phr, or up to 20 phr, or up to or up to 10 phr, or up to 6 phr. The hydrocarbon resin preferably have a Tg of at least 30°C, or up to 50°C. Hydrocarbon resin Tg can be determined by DSC, according to the procedure discussed above for elastomer Tg measurements. The hydrocarbon resin preferably has a softening point of at least 70°C, or up to 100°C. The softening point of a hydrocarbon resin is generally related to the Tg. The Tg is generally lower than its softening point, and the lower the Tg the lower the softening point.

Examples of aliphatic resins include C5 fraction homopolymer and copolymer resins. Examples of cycloaliphatic resins include cyclopentadiene ("CPD") homopolymer or copolymer resins, dicyclopentadiene ("DCPD") homopolymer or copolymer resins, and combinations thereof. Examples of aromatic resins include aromatic homopolymer resins and aromatic copolymer resins. An aromatic copolymer resin refers to a hydrocarbon resin which comprises a combination of one or more aromatic monomers in combination with one or more other (non-aromatic) monomers, with the majority by weight of all monomers generally being aromatic.

Specific examples of aromatic resins include coumarone-indene resins, alkylphenol resins, and vinyl aromatic homopolymer or copolymer resins. Examples of alkylphenol resins include alkylphenol-acetylene resins such as p-tert-butylphenol-acetylene resins, alkylphenol-formaldehyde resins (such as those having a low degree of polymerization). Vinyl aromatic resins may include one or more of the following monomers: 1-methylstyrene, styrene, 2-methylstyrene, 3-methylstyrene, vinyltoluene, and the like. Examples of vinyl aromatic copolymer resins include vinyl aromatic/terpene copolymer resins (e.g., limonene/styrene copolymer resins), vinyl aromatic/C5 fraction resins (e.g., C5 fraction/styrene copolymer resin), vinyl aromatic/aliphatic copolymer resins (e.g., CPD/styrene copolymer resin, and DCPD/styrene copolymer resin).

In the case of an aromatic resin based upon one or more of the above-mentioned vinyl aromatic monomers (e.g., styrene, 1-methylstyrene), at least 80% by weight, or at least 85% by weight, or at least 90% by weight, or at least 95% by weight, or up to 100% by weight of the monomers in the aromatic resin may be aromatic monomers.

Other aromatic resins include terpene resins, such as alpha-pinene resins, beta-pinene resins, limonene resins (e.g., L-limonene, D-limonene, dipentene which is a racemic mixture of L- and D-isomers), beta-phellandrene, delta-3-carene, delta-2-carene, and combinations thereof.

Other example resins which may be used in the rubber composition include tackifying resins, such as unreactive phenol formaldehyde, and stiffness resins, such as reactive phenol formaldehyde resins and resorcinol or resorcinol and hexamethylene tetramine, which may be used at 1 to 10 phr, with a minimum tackifier resin, if used, being 1 phr and a minimum stiffener resin, if used, being 3 phr. Other resins include benzoxazine resins, as described in US 2022/0195153 A1, which may be used at, e.g., from 2 phr to 10 phr.

### Waxes

Wax(es) may be absent from the rubber composition, or may be present in the rubber composition at 0.1 phr or more, or at least 0.3 phr, or at least 0.5 phr, such as at least 0.3 phr, or at least 0.5 phr, or up to 5 phr, or up to 2 phr, or up to 1 phr. In some embodiments, no wax is employed.

Suitable waxes include paraffin waxes and microcrystalline waxes, which may be of the type described in The Vanderbilt Rubber Handbook (1978), pp. 346 and 347. Such waxes can serve as antiozonants.

### Other Processing Aids

In addition to one or more of the above processing aids, the rubber composition may include a peptizer, such as pentachlorothiophenol, dibenzamidodiphenyl disulfide, or a mixture thereof. Typical amounts of peptizer, if used, may be 0.1 phr to 1 phr.

### Fillers

The rubber composition preferably includes at least 30 phr, or at least 45 phr, or at least 50 phr, or up to 150 phr, or up to 120 phr, or up to 80 phr, or up to 70 phr of reinforcing fillers.

In a preferred embodiment, only two reinforcing fillers are used in the rubber composition, carbon black (CB) and silica. In other embodiments, additional fillers may be employed.

The ratio by weight of silica to carbon black is preferably at least 1:2, or at least 1:1, or at least 2:1, or at least 4:1, e.g., up to 20:1, or up to 10:1, or up to 8:1.

### Silica

The term "silica" is used herein to refer to particulate silicon dioxide, SiO₂ (which may contain minor amounts of impurities, generally less than 1 wt. %, resulting from the process in which the silica is formed). The silica may be a precipitated silica which formed by digesting amorphous silica with sodium hydroxide to form sodium silicate and precipitating silica from sodium silicate by reaction with an acidifying agent, such as sulfuric acid or carbon dioxide. Methods for the preparation of precipitated silica are disclosed, for example, in US 5,587,416, US 6,221,149 B1, US 6,268,424 B1, US 6,335,396 B1, US 7,585,481 B2, US 9,334,169 B2, US 9,359,215 B2, US 2003/0118500 A1, US 2004/0062701 A1, and US 2005/0032965 A1. Precipitated silica may also be formed from silica gel as described, for example, US 5,789,514, US 5,708,069, and US 7,550,610 B1. Silica gels may be derived, for example, by hydrophobating a silica hydrogel with, for example, an organomercaptosilane and alkyl silane and drying the product.

The silica is preferably present in the rubber composition in an amount of at least 20 phr, or at least 30 phr, or at least 40 phr, or at least 50 phr, or at least 60 phr, or up to 120 phr, or up to 80 phr, or up to 70 phr. Expressed as phf, the silica is preferably present in an amount of at least 50 phf, or at least 60 phf, or at least 70 phf, or at least 80 phf, or up to 95 phf.

The exemplary silica is preferably characterized by a CTAB specific surface area of at least 60 m²/g, or at least 120 m²/g, or at least 140 m²/g, or at least 160 m²/g, or at least 220 m²/g. The silica may have a CTAB specific surface area of up to 500 m²/g, or up to 400 m²/g, or up to 300 m²/g. The CTAB surface area of silica is measured according to ASTM D6845-20 "Standard Test Method for Silica, Precipitated, Hydrated-CTAB (Cetyltrimethylammonium Bromide) Surface Area." This test method covers the measurement of the specific surface area of precipitated silica, exclusive of area contained in micropores too small to admit hexadecyltrimethylammonium bromide (cetyltrimethylammonium bromide, commonly referred to as CTAB) molecules.

The silica is preferably characterized by a BET specific surface of at least 40 m²/g, or up to 500 m²/g. The BET specific surface is determined according to the Brunauer-Emmett-Teller method according to the standard ISO 5794-1:2022, Appendix D.

Exemplary precipitated silicas are available from Solvay as Zeosil^{™}, e.g., under the designations 115GR, 125GR, 165GR, 175GR, 185GR, 195GR, 1085GR, 1165MP, 1115MP, HRS 1200MP, Premium MP, Premium 200MP, Premium SW, and 195HR; from PPG Industries as Hi-Sil^{™}, e.g., under the designations 210, 243, 315, EZ 160G-D, EZ 150G, 190G, 200G-D, HDP-320G, and 255CG-D; from Evonik as Ultrasil^{™}, under the designations VN2, VN3, VN3GR, 5000GR, 7000GR, 9000GR, as Zeopol^{™}, under the designations 8755LS and 8745; from Wuxi Quechen Silicon Chemical Co., Ltd. as Newsil^{™}, under the designations 115GR and 2000MP; from Maruo Calcium Co., Ltd., as Tokusil^{™} 315, and chemically treated precipitated silicas, such as for example Agilon^{™} 400 from PPG. For example, Zeosil 1165MP^{™} from Solvay has a CTAB surface area of about 160 m²/g, while Zeosil^{™} Premium SW has a CTAB specific surface area of about 250 m²/g.

### Carbon Black

The carbon black may be absent from the rubber composition or may be present in the rubber composition in an amount of at least 1 phr, or at least 3 phr, or at least 5 phr, or at least 30 phr, or at least 40 phr, or up to 60 phr, or up to 55 phr, or up to 20 phr, or up to 15phr, or up to 10 phr.

Carbon black particulate reinforcing fillers employed in the rubber composition are preferably characterized by a CTAB specific surface area of at least 20 m²/g, or at least 35 m²/g, or at least 100 m²/g, or up to 200 m²/g or higher, or up to 120 m²/g, or up to 118 m²/g, or up to 116 m²/g, as determined by ASTM D-1765-21, "Standard Classification System for Carbon Blacks Used in Rubber Products," using the Cetyltrimethylammonium Bromide (CTAB) technique.

The carbon black may be characterized by an Iodine value (ASTM D1510-21, "Standard Test Method for Carbon Black-Iodine Adsorption Number") in a range of from 110 to 130 mg/g and a dibutyl phthalate (DBP) value (ASTM D2414-22, "Standard Test Method for Carbon Black-Oil Absorption Number (OAN)") in a range of from 120 to 140 ml/100 g. Example carbon blacks include furnace black, channel blacks, and lamp blacks. Specific examples of useful carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which can be utilized include acetylene blacks. In certain embodiments, the rubber composition includes a mixture of two or more of the carbon blacks.

Representative examples of such carbon blacks include ASTM designations N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991, as specified by ASTM D1765-21, "Standard Classification System for Carbon Blacks Used in Rubber Products." These carbon blacks have iodine absorptions ranging from 9 to 145 g/kg and DBP number ranging from 34 to 150 cm³/100 g.

### Other Fillers

Reinforcing fillers, other than the silica and carbon black, may be utilized, e.g., in amounts of up to 30 phr, or up to 20 phr, or up to 10 phr, or up to 5 phr, or up to 1 phr, or may be absent. Examples of such additional reinforcing fillers include alumina, aluminum hydroxide, clay (reinforcing grades), magnesium hydroxide, boron nitride, aluminum nitride, titanium dioxide, reinforcing zinc oxide, and combinations thereof.

In one embodiment, components of the rubber composition other than the SBR, polybutadiene, carbon black, and high surface area silica (such as other elastomers, other reinforcing fillers, non-reinforcing fillers, processing aids, antioxidants, antiozonants, antidegradants, and the cure package) are present at no more than 40 phr of the rubber composition, or no more than 30 phr, or no more than 20 phr of the rubber composition.

### Antidegradants and Antioxidants

Exemplary antioxidants suited to use in the rubber composition include amine based antioxidants, such as paraphenylenediamines (PPDs), e.g., N-(1,3-dimethylbutyl)-N'-phenyl-p-phenylenediamine (6PPD), para-phenylenediamine, and others, such as those disclosed in The Vanderbilt Rubber Handbook (1978), pages 344-346. Such antioxidants may also serve as antiozonants and may be used at from 0.1 to 5 phr, such as at least 0.3 phr, or at least 1 phr, or at least 2 phr. In some embodiments, at least a portion of the antioxidant is provided in the SBR.

Exemplary antidegradants include amine based antidegradants and phenol-containing antidegradants, and may be used at from 1 to 5 phr. Phenol-containing antidegradants include polymeric hindered phenol antioxidants, and others, such as those included in The Vanderbilt Rubber Handbook (1978), pages 344-347.

### The Silica Coupling Agent

The silica coupling agent, where present, aids in coupling the silica particles to the elastomer and may be difunctional or polyfunctional. The coupling agent generally includes a first functional group that is reactive with hydroxyl groups (e.g., silanol groups) that are present on the surface of precipitated silica and a second functional group that is capable of reacting with a diene-based elastomer. The two (or more) functional groups in the coupling agent are connected by a linking group, e.g., a hydrocarbyl or sulfidic bridge, such that the precipitated silica is chemically bonded to the elastomer.

The rubber composition preferably includes 0.1 to 15 phr silica coupling agent, e.g., at least 1 phr, or at least 3 phr, or at least 4 phr, or up to 20 phr, or up to 12 phr, or up to 10 phr, or up to 6 phr of the silica coupling agent.

Examples of silica coupling agents include silanes having groups such as alkyl alkoxy, mercapto, blocked mercapto, sulfide-containing (e.g., monosulfide-based alkoxy-containing, disulfide-based alkoxy-containing, tetrasulfide-based alkoxy-containing), amino, vinyl, epoxy, and combinations thereof. Exemplary coupling agents include bis(trialkoxysilylorgano)polysulfides, alkyl alkoxysilanes, mercapto silanes, blocked mercapto silanes, and mixtures thereof.

Examples of bis(trialkoxysilylorgano)polysulfides include bis(trialkoxysilylalkyl)polysulfide coupling agents, such as bis(trialkoxysilylalkyl)disulfides and bis(trialkoxysilylalkyl)tetrasulfides. Specific examples of bis(trialkoxysilylalkyl)disulfides include 3,3'-bis(triethoxysilylpropyl)disulfide, 3,3'-bis(trimethoxysilylpropyl)disulfide, 3,3'-bis(tributoxysilylpropyl)disulfide, 3,3'-bis(tri-t-butoxysilylpropyl)disulfide, 3,3'-bis(trihexoxysilylpropyl)disulfide, 2,2'-bis(dimethylmethoxysilylethyl)disulfide, 3,3'-bis(diphenylcyclohexoxysilylpropyl)disulfide, 3,3'-bis(ethyl-di-sec-butoxysilylpropyl)disulfide, 3,3'-bis(propyldiethoxysilylpropyl)disulfide, 12,12'-bis(triisopropoxysilylpropyl)disulfide, 3,3'-bis(dimethoxyphenylsilyl-2-methylpropyl)disulfide, and mixtures thereof. Examples of bis(trialkoxysilylorgano)tetrasulfide coupling agents include bis(3-triethoxysilylpropyl)tetrasulfide, bis(2-triethoxysilylethyl)tetrasulfide, bis(3-trimethoxysilylpropyl)tetrasulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-N,N-dimethylthiocarbamoyl tetrasulfide, 3-trimethoxysilylpropyl-benzothiazole tetrasulfide, 3-triethoxysilylpropylbenzothiazole tetrasulfide, and mixtures thereof.

Examples of alkyl alkoxysilanes include octyltriethoxysilane, octyltrimethoxysilane, trimethylethoxysilane, cyclohexyltriethoxysilane, isobutyltriethoxysilane, ethyltrimethoxysilane, and mixtures thereof.

Examples of mercapto silanes include 1-mercaptomethyltriethoxysilane, 2-mercaptoethyltriethoxysilane, 3-mercaptopropyltriethoxysilane, 3-mercaptopropylmethyldiethoxysilane, 2-mercaptoethyltripropoxysilane, 18-mercaptooctadecyldiethoxychlorosilane, and mixtures thereof.

Examples of blocked mercapto silanes include 2-triethoxysilyl-1-ethylthioacetate, 2-trimethoxysilyl-1-ethylthioacetate, 2-(methyldimethoxysilyl)-1-ethylthioacetate, 3-trimethoxysilyl-1-propylthioacetate, triethoxysilylmethyl-thioacetate, trimethoxysilylmethylthioacetate, triisopropoxysilylmethylthioacetate, methyldiethoxysilylmethylthioacetate, methyldimethoxysilylmethylthioacetate, mixtures thereof, and others, as disclosed, for example in U.S. Pat. No. 6,777,569B1.

Other examples of silane coupling agents are described, for example, in U.S. Pat. Nos. 5,094,829 A, 6,608,125 A, 7,214,731 B2, 7,473,724 B2, 7,714,051 B2, 8,017,696 B2, 8,329,805 B2, 9,074,073 B2, 9,212,275 B2, and 11,118,036 B2 and U.S. Pub. Nos. 2003/0130535 A1 and 2010/0190885 A1.

In certain embodiments, the silica coupling agent can be added to the rubber composition in the form of a pre-treated silica. The pre-treated silica can be one that has been surface treated with the silane coupling agent prior to being added to the rubber composition. The use of a pre-treated silica can allow for two ingredients (i.e., silica and a silica coupling agent) to be added as one ingredient, which generally tends to make rubber compounding easier. Alternatively, the silica and coupling agent may be added to the rubber composition as separate components.

In one embodiment, the coupling agent is a 3,3'-bis(trialkoxysilylpropyl)polysulfide having an average of from 2 to 4 connecting sulfur atoms in its polysulfidic bridge, available as Si 266^{®}, Si 69^{®}, and Si 363^{®}, from Evonik Industries.

The silica coupling agent may be present in an amount sufficient to provide a ratio of the total amount of silica coupling agent to silica filler of at least 0.1:100 or up to 1:5, by weight, e.g., a ratio of at least 1:100, or at least 1: 50, or up to 1:20, or up to 1:15, such as from 1:10 to 1:15.

In other embodiments, a silica coupling agent is not present in the rubber composition.

### Cure Package

The cure package includes a) a vulcanizing (cure) agent, b) optionally, at least one of: a cure accelerator, a cure activator, a free radical initiator, and a cure inhibitor. The cure package is preferably used in the rubber composition at 0.25 phr or more, or at least 0.5 phr, or at least 5 phr, or up to 30 phr, or up to 20phr, or up to 15 phr, or up to 10 phr.

### Vulcanizing (Cure) agent

The vulcanization of the rubber composition is conducted in the presence of a vulcanizing agent, such as a sulfur vulcanizing agent.

Examples of suitable sulfur vulcanizing agents include elemental sulfur (free sulfur), insoluble polymeric sulfur, soluble sulfur, and sulfur donating vulcanizing agents, for example, an amine disulfide, polymeric polysulfide, or sulfur olefin adduct, and mixtures thereof.

Sulfur vulcanizing agents, such as elemental sulfur, are preferably used in an amount of at least 0.1 phr, or at least 0.3 phr, at least 0.4 phr, or at least 0.5 phr, or up to 10 phr, or up 6 phr, or up to 4 phr, or up to 2 phr.

### Cure Accelerators, Cure Activators, Free Radical initiators, and Inhibitors

Cure accelerators and activators act as catalysts for the vulcanization agent.

Accelerators are used to control the time and/or temperature required for vulcanization and to improve the properties of the vulcanizate. In one embodiment, a single accelerator system may be used, i.e., primary accelerator.

A primary accelerator may be used in an amount of at least 0.1 phr, or at least 1 phr, or up to 10 phr, or up to 5 phr. In another embodiment, combinations of two or more accelerators may be used. In this embodiment, a primary accelerator is generally used in the larger amount (e.g., 0.5 to 3 phr), and a secondary accelerator is generally used in smaller amounts (e.g., 0.05 to 0.50 phr), in order to activate and to improve the properties of the vulcanizate. Combinations of such accelerators have historically been known to produce a synergistic effect of the final properties of sulfur-cured rubbers and are often somewhat better than those produced by use of either accelerator alone. In addition, delayed action accelerators may be used which are less affected by normal processing temperatures but produce satisfactory cures at ordinary vulcanization temperatures.

Representative examples of accelerators include amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound, although a second sulfenamide accelerator may be used.

Examples of thiazole cure accelerators include 2-mercaptobenzothiazole, 2,2'-dithiobis(benzothiazole) (MBTS). Guanidine cure accelerators include diphenyl guanidine (DPG). Examples of sulfenamide cure accelerators include benzothiazole sulfenamides, such as N-cyclohexyl-2-benzothiazolesulfenamide (CBS), and N-tert-butyl-2-benzothiazole-sulfenamide (TBBS).

Cure accelerators having a very fast vulcanization initiation time which may be used alone or in combination with another cure accelerator include 1,6-bis(N,N'-dibenzylthiocarbamoyldithio)hexane (BDBZTH), tetrabenzylthiuram disulfide (TBzTD), tetramethyl thiuram monosulfide (TMTM), tetramethyl thiuram disulfide (TMTD), tetraethyl thiuram disulfide (TETD), tetraisobutyl thiuram disulfide (TiBTD), dipentamethylene thiuram tetrasulfide (DPTT), zinc dibutyl dithiocarbamate (ZDBC), zinc diethyl dithiocarbamate, zinc dimethyl dithiocarbamate, copper dimethyl dithiocarbamate, tellurium diethyl dithiocarbamate (TDEC), zinc dibenzyl dithiocarbamate (ZBED), zinc diisononyl dithiocarbamate, zinc pentamethylene dithiocarbamate, zinc dibenzyldithiocarbamate (ZBEC), zinc isopropyl xanthate (ZIX), zinc butyl xanthate (ZBX), sodium ethyl xanthate (SEX), sodium isobutyl xanthate (SIBX), sodium isopropyl xanthate (SIPX), sodium n-butyl xanthate (SNBX), sodium amyl xanthate (SAX), potassium ethyl xanthate (PEX), potassium amyl xanthate (PAX), zinc 2-ethylhexylphosphorodithioate (ZDT/S), and mixtures thereof.

In one embodiment, one or more of a benzothiazole sulfenamide and a guanidine cure accelerator may be used.

The total amount of the cure accelerator is preferably from 0.1 to 10 phr, or at least 0.5 phr, or at least 2 phr, or at least 5 phr, or up to 10 phr, or up to 8 phr.

Cure activators are additives which are used to support vulcanization. Cure activators include both inorganic and organic cure activators. Zinc oxide is the most widely used inorganic cure activator and may be present at 0.5 phr to 10 phr, e.g., at least 1 phr, or at least 1.5 phr, or at least 2 phr, or up to 6 phr, or up to 4 phr.

Organic cure activators include stearic acid, palmitic acid, lauric acid, zinc salts of each of the foregoing, and thiourea compounds, e.g., thiourea, and dihydrocarbylthioureas such as dialkylthioureas and diarylthioureas, and mixtures thereof. Specific thiourea compounds include N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea.

The total amount of organic cure activator(s), where present, may be from 0.05 to 6 phr, such as at least 0.1 phr, or at least 0.5 phr, or at least 1 phr, or up to 4 phr.

Free radical initiators, which may be used in some embodiments, are sometimes known as redox initiators, and include combinations of chelated iron salts, sodium formaldehyde sulfoxylate, and organic hydroperoxides. Representative organic hydroperoxides include cumene hydroperoxide, paramenthane hydroperoxide, and tertiary butyl hydroperoxide. The free radical initiator may be used in combination with, or as an alternative to, a sulfur-based vulcanizing agent. The amount of free radical initiator, where used, may be 0.1 to 4 phr, or 0.5 to 2 phr. In other embodiments, free radical initiators are absent from the rubber composition.

Cure inhibitors are used to control the vulcanization process and generally retard or inhibit vulcanization until the desired time and/or temperature is reached. Example cure inhibitors include cyclohexylthiophthalimide.

The amount of cure inhibitor, if used, may be 0.05 to 3 phr, or 0.5 to 2 phr.

### Example Compositions

TABLE 2 illustrates exemplary rubber compositions in accordance with aspects of the exemplary embodiment.

**TABLE 2: Example Rubber Compositions (in phr)**

| Component | Example 1 | Example 2 | Example 3 |
|---|---|---|---|
| Elastomers, e.g., mixture of PBD and SBR | 100 | 100 | 100 |
| Carbon Black | 0 - 20 | 1 - 15 | 3 - 10 |
| Silica | 20 - 150 | 40 - 120 | 50 - 70 |
| Silica coupling agent | 2 - 20 | 2 - 10 | 3 - 6 |
| Resin | 0 - 80 | 1 - 30 | 3 - 20 |
| Esterified alkoxylated polyol (e.g., EPG) oil | 3 - 60 | 5 - 40 | 8 - 30 |
| Plant triglyceride oil (e.g., soybean oil) | 3 - 60 | 5 - 40 | 8 - 30 |
| Wax (Paraffin wax and/or microcrystalline wax) | 0 - 10 | 0.3 - 5 | 0.5 - 3 |
| Antioxidant / antiozonant, e.g., p-phenylenediamine, such as N-(1,3-dimethylbutyl)-N'-phenyl-p-phenylenediamine (6PPD) | 0.5 - 5 | 1 - 4 | 1.5 - 3 |
| Organic cure activator (such as fatty acids, e.g., stearic acid) | 1 - 7 | 1.5 - 5 | 2 - 4 |
| Inorganic cure activator, e.g., Zinc Oxide | 0.5 - 8 | 1 - 6 | 1 - 4 |
| Cure accelerator, e.g., Sulfenamide, such as N-cyclohexyl-2-benzothiazolesulfenamide (CBS) and/or Guanidine such as N,N'-diphenyl guanidine (DPG) | 0.5 - 6 | 1 - 5 | 2 - 5 |
| Elemental Sulfur | 0.3 - 10 | 0.5 - 6 | 1 - 2 |

As will be appreciated, combinations of values from two or more of these illustrative examples are also contemplated.

### Preparation of the Rubber Composition

Rubber compositions may be prepared by mixing the vulcanizable elastomers, silica and carbon black, silica coupling agent, processing oils, and other rubber compounding ingredients, not including the cure agent, in at least one sequential mixing stage with at least one mechanical mixer, usually referred to as "non-productive" mixing stage, or stage(s), to an elevated temperature under high shear rubber mixing conditions, followed by a final "productive" mixing stage, in which a sulfur-based cure package, such as a sulfur-based cure agent and cure accelerators, is added to the mixture and mixed at a lower mixing temperature, below the vulcanization (cure) temperature, to avoid unnecessarily pre-curing the rubber mixture during the mixing stage. The ingredients may be mixed in the non-productive mixing stage(s) for 2 minutes to a temperature between 100°C and 200°C. The use of silica filler may optionally necessitate a separate re-mill stage for separate addition of a portion or all of such filler. This stage often is performed at temperatures similar to, although often slightly lower than, those employed in the other non-productive mixing stages, e.g., ramping from 90°C to 150°C.

Once the cure package is added, the subsequent productive mixing step may be conducted at a temperature of no more than 120°C, such as at least 40°C, or at least 60°C, e.g., for 2 minutes at a temperature of 110-115°C. Mixing may be performed, for example, by kneading the ingredients together in a Banbury mixer or on a milled roll. The rubber composition may be cooled to a temperature below 40 °C between each of the mixing stages. For example, the rubber composition may be dumped from the mixer after each mixing step, sheeted out from an open mill, and allowed to cool to below 40°C after each mixing step.

When the cure package is thoroughly mixed, the temperature of the mixture may be raised to effect cure. Curing of the pneumatic tire or part thereof may be carried out at a temperature of from 120°C to 200°C, e.g., at least 140°C, or up to 180°C, or 150°C. Any of the usual vulcanization processes may be used, such as heating in a press or mold, or heating with superheated steam or hot air. Such tires can be built, shaped, molded and cured by various methods which are known and will be readily apparent to those having skill in such art.

In one embodiment, a tire is provided, the tire having a tread formed, at least in part, from the exemplary rubber composition. Other parts of the tire, such as the tire sidewalls, may additionally, or alternatively, be formed, at least in part, from a rubber composition as described herein. The tire may be a pneumatic tire for an on-the-road vehicle, such as an automobile or truck, or a tire for an off-road vehicle, or airplane.

The rubber composition is not limited to use in tires but may find application in rubber gloves, surgical instruments, and the like.

### Tire Tread Properties

The use of the rubber composition in tires, such as tire treads, may result in a tire having improved or desirable tread properties. These improved or desirable properties may include tensile, tear resistance, wear resistance, wet braking, handling, and rolling resistance.

Without intending to limit the scope of the exemplary embodiment, the following examples illustrate preparation of the exemplary rubber compositions employing the high carbon black: silica ratio and properties thereof.

### Examples

Samples of different esterified propoxylated glycerols (EPGs) were obtained from Tetramer Technologies LLC.

Rubber compositions A-I are prepared using the formulation shown in TABLE 3. All components were used without further purification.

The rubber composition is mixed in three stages; the first two are non-productive and the third stage is a productive stage in which the accelerators, (other than zinc oxide), activators and sulfur are added.

In the first stage, the composition is mixed until it reaches a first target temperature. In the second stage, it is mixed until the temperature reaches a second target temperature, which may be the same or different from the first target temperature. In the productive stage, the rubber composition is mixed until it reaches a third target temperature. The target temperatures are adjusted, as is known in the art, to achieve proper mixing without resulting in degradation of the components used. In the curing stage, the rubber composition is heated to a temperature of 130°C to 200°C with the cure time being adjusted depending on the temperature.

**TABLE 3: Rubber Compositions (in phr)**

| **Ingredient (Phr)** | **Ex. A** | **Ex. B** | **Ex. C** | **Ex. D, E** | **Ex. F, G, H, I** |
|---|---|---|---|---|---|
| **Non-Productive Stage(s)** | | | | | |
| Polymer¹ | 100 | 100 | 100 | 100 | 100 |
| Silica² | 65 | 65 | 65 | 65 | 65 |
| Naphthenic Oil³ | 20 | 10 | | | |
| Soybean Oil⁴ | | 10 | 20 | 10 | |
| EPG Oil⁵ | | | | 10 | 20 |
| Difunctional silane coupling agent⁶ | 5.2 | 5.2 | 5.2 | 5.2 | 5.2 |
| Other Additives⁷ | 11.5 | 11.5 | 11.5 | 11.5 | 11.5 |

| **Productive Stage** | | | | | |
|---|---|---|---|---|---|
| Sulfur⁸ | 1.7 | 1.7 | 1.7 | 1.7 | 1.7 |
| Total phr | 203.4 | 203.4 | 203.4 | 203.4 | 203.4 |

| | | | | | |
|---|---|---|---|---|---|
| ¹ 30:70 mixture of BUD4001^{™}: Ziegler-Natta catalyzed, relatively high cis 1,4-polybutadiene from The Goodyear Tire & Rubber Company having a Tg of about -102°C, and SPRINTAN^{™} SLR 4602-Schkopau: a solution-polymerized styrene-butadiene copolymer from Trinseo LLC (Mooney Viscosity of 65, 21.0 % bound styrene, and 49.0% vinyl structure). ² Precipitated silica from Solvay, Zeosil 1165MP^{™}, BET surface area of about 165 m²/g, and a CTAB surface area of about 160 m²/g. ³ Cross Corsol 100^{™}, heavy naphthenic process oil from Cross Oil Refining & Marketing. ⁴ Soybean oil supplied by Cargill Incorporated. ⁵ EPG oils supplied by Tetramer Technologies LLC: Example D: EPG-10, C12 fatty acid Example E: EPG-05, C12 fatty acid Example F: EPG-10, C12 fatty acid Example G: EPG-05, C12 fatty acid Example H: EPG-10, C16 fatty acid Example I: EPG-05, C16 fatty acid ⁶ Si 266^{®}, Bis-(3-triethoxysilylpropyl)disulfide containing, on average, from 2 to 2.6 connecting sulfur atoms in its polysulfidic bridge, from Evonik Industries. ⁷ Additives: combination of fatty acids (stearic, palmitic, and oleic), carbon black from Tokai Carbon, waxes (microcrystalline and/or paraffinic), zinc oxide, and diphenyl guanidine and sulfenamide sulfur cure accelerators. ⁸ Elemental sulfur from Chemical Plant "Siarkopol" Tarnobrzeg Ltd. | | | | | |

### Properties of the Rubber Compositions

The following tests are performed on strips of the cured rubber compositions, except as otherwise noted.

Processing ability is evaluated with a Rubber Process Analyzer (RPA) according to the method described in ASTM D2084-19a, "Standard Test Method for Rubber Property - Vulcanization Using Oscillating Disk Cure Meter," using a Monsanto oscillating disc rheometer (MDR) which is operated at a frequency of 11 hertz.

Tensile properties are measured on die-cut C specimens with an Automated Testing System instrument by the Instron Corporation. Such instrument may determine ultimate tensile, ultimate elongation, moduli, etc. The tests include 300% Modulus (Ring) (MPa), and Elongation at break (MPa), and Instron Tear Resistance (Strebler Tear) (Newtons), determined as the interfacial adhesion between two samples of the rubber composition (average load/width), when one rubber composition sample is pulled away from the other at a right angle.

Wear resistance (Wear): evaluated as DIN Abrasion according to DIN 53516, as the volume loss relative to a control sample.

Wet Performance: is measured by Rebound at a low temperature (lower values are better).

Cold weather (Winter) Performance is a laboratory prediction based on the stiffness (storage modulus G'), which is measured at a low temperature, under slight strain.

Handling: samples are tested for viscoelastic properties (G', elastic modulus) using an ARES rotational rheometer and Rubber Process Analyzer (RPA) testing.

Rolling Resistance: evaluated by a weighted combination of the Rebound, and results of the RPA and ARES tests.

**TABLE 3: Results for Samples A and B**

| **Test** | | **Example A** | **Example B** |
|---|---|---|---|
| Processing | | 100 | 106 |
| Tensile | | | |
| | Elongation at break | 100 | 122 |
| | Modulus 300% | 100 | 84 |
| Tear Resistance | | 100 | 115 |
| Wear | | 100 | 97 |
| Wet Performance | | 100 | 96 |
| Handling | | 100 | 98 |
| Rolling Resistance | | 100 | 92 |
| Winter Performance | | 100 | 117 |

Data in Table 3 is normalized to Example A (naphthenic oil only) to illustrate percent improvement (or deficit) for Example B (using soybean oil).

**TABLE 4: Results for Examples C to I**

| | | Ex. C | Ex. D | Ex. E | Ex. F | Ex. G | Ex. H | Ex. I |
|---|---|---|---|---|---|---|---|---|
| Processing | | 100 | 88 | 97 | 82 | 82 | 84 | 95 |
| Tensile | | | | | | | | |
| | Elongation at break | 100 | 97 | 94 | 89 | 82 | 94 | 86 |
| | Modulus 300% | 100 | 107 | 110 | 122 | 131 | 115 | 126 |
| Tear | | 100 | 87 | 90 | 89 | 79 | 92 | 87 |
| Wear | | 100 | 100 | 109 | 127 | 110 | 113 | 110 |
| Wet braking | | 100 | 104 | 104 | 115 | 107 | 115 | 130 |
| Handling | | 100 | 112 | 108 | 145 | 145 | 152 | 142 |
| Rolling Resistance | | 100 | 109 | 110 | 91 | 92 | 88 | 93 |
| Winter | | 100 | 84 | 80 | 1 | 21 | -233 | -354 |

In Table 4, the data is normalized to Example C (soybean oil only) to indicate percent improvement or deficit.

As can be seen from Table 4, Examples D and E, containing both EPG and triglyceride oils, provided relatively good winter performance (slightly lower than Example C), while also providing comparable or better performance on other properties, such as tensile, tear, wear, wet braking, handling, and rolling resistance. Samples with no plant-based triglyceride oil performed poorly on winter performance, when compared with the other Examples (note, a value of below 0 indicates that the example performed more than 100% worse than Example C).

The results for samples using the EPG derivatives blended with soybean oil (Examples D and E) thus indicate that many improvements can be achieved over soybean oil used alone (Example C). Processing of these Examples decreases slightly compared with Example C, though still remains well within acceptable ranges for the industry. Improvements in tensile and handling indicators for the EPG blends D and E compared to naphthenic oil alone (Example A), with no significant changes in tear, winter, wet, rolling resistance, or abrasion resistance indicators are also observed. Thus, it can be concluded that EPG oils can provide better tire performance than naphthenic oil and soybean oil.

It is expected that the loss in winter performance observed in Samples F, G, H, and I is too significant to be able to be recovered through standard compound changes. Thus, it is the material change of blending EPG derivatives with soybean oil that recovers the rheological properties to within acceptable ranges.

## Claims

1. A rubber composition comprising 100 phr of elastomers, at least 30 phr of reinforcing filler, at least 1 phr of an esterified alkoxylated polyol, at least 1 phr of a plant-based triglyceride oil and a sulfur-based cure package.

2. The rubber composition of claim 1, wherein the esterified alkoxylated polyol has an average degree of alkoxylation of at least 5.

3. The rubber composition of claim 1 or 2, wherein the esterified alkoxylated polyol comprises an esterified propoxylated glycerol, preferably an esterified propoxylated glycerol including terminal groups derived from at least one of a C8 to a C24 fatty acid or an esterified propoxylated glycerol comprising terminal groups derived from at least one of a C12 or higher fatty acid.

4. The rubber composition of at least one of the previous claims, wherein the rubber composition comprises at least 5 phr of the esterified alkoxylated polyol.

5. The rubber composition of at least one of the previous claims, wherein the ratio, by weight, of the esterified alkoxylated polyol to the plant-based triglyceride oil is in a range of from 3:1 to 1:3.

6. The rubber composition of at least one of the previous claims, wherein the plant-based triglyceride oil is selected from the group consisting of soybean oil, sunflower oil, canola oil, corn oil, coconut oil, cottonseed oil, olive oil, palm oil, peanut oil, safflower oil, and mixtures thereof; or wherein the plant-based triglyceride oil comprises soybean oil.

7. The rubber composition of at least one of the previous claims, wherein the rubber composition comprises at least 5 phr of the plant-based triglyceride oil.

8. The rubber composition of at least one of the previous claims, wherein the elastomers comprise a polybutadiene rubber and a styrene butadiene rubber.

9. The rubber composition of at least one of the previous claims, wherein the reinforcing filler comprises silica and carbon black, and, optionally, wherein the ratio by weight of silica to carbon black in the rubber composition is at least 2:1.

10. The rubber composition of at least one of the previous claims, wherein the rubber composition comprises at least 20 phr silica and/or at least 3 phr carbon black.

11. The rubber composition of at least one of the previous claims, further comprising at least 1 phr of a silane-based silica coupling agent.

12. The rubber composition of at least one of the previous claims, further comprising at least one of a cure activator, a cure accelerator, an antioxidant, an antidegradant, and an antiozonant.

13. The rubber composition of at least one of the previous claims comprising:
100 phr of elastomers;
45-80 phr of a combination of carbon black and silica, the ratio of the silica to the carbon black being at least 4:1;
a processing oil comprising an esterified alkoxylated polyol and a plant-based triglyceride oil, a ratio by weight the esterified alkoxylated polyol to the plant-based triglyceride oil being in a range of from 3:1 to 1:3;
a total of 1-5 phr of at least one of an antioxidant and an antiozonant; and
a total of 5-15 phr of a sulfur-containing cure package comprising a sulfur cure agent, a cure activator, and a cure accelerator.

14. A pneumatic tire having a component, preferably a circumferential rubber tread, the component comprising the rubber composition of at least one of the previous claims.

15. A method of forming a shaped article such as a tire or a tire tread, the method comprising:
combining 100 phr of elastomers, at least 30 phr of reinforcing filler, at least 1 phr of an esterified alkoxylated polyol, at least 1 phr of a plant-based triglyceride oil, and a sulfur-based cure package to form a rubber composition; and
curing the rubber composition to form the shaped article.
